# EUROPEAN PATENT SPECIFICATION

(11) **EP 2 351 719 B1**
(45) Date of publication and mention of the grant of the patent: **11.02.2015**
(21) Application number: 10829469.5
(22) Date of filing: 15.07.2010
(51) Int. Cl.: C04B 7/48, C04B 7/02

(54) **PROCESS OF REGULATING AND CONTROLLING ALITE CRYSTAL IN PORTLAND CEMENT CLINKER**
VERFAHREN ZUR REGULIERUNG UND STEUERUNG VON ALITKRISTALL IN PORTLANDZEMENTKLINKER
PROCÉDÉ DE RÉGULATION ET DE CONTRÔLE DE CRISTAL ALITE DANS UN CLINKER DE CIMENT PORTLAND

(30) Priority: 13.11.2009 CN 200910212646
(43) Date of publication of application: 03.08.2011
(73) Proprietor: Nanjing University Of Technology, Jiangsu 210009 (CN)
(72) Inventor: SHEN, Xiaodong, Jiangsu 210009 (CN); MA, Suhua, Jiangsu 210009 (CN); LI, Xuerun, Jiangsu 210009 (CN); CHEN, Lin, Jiangsu 210009 (CN); ZHOU, Weiqiang, Jiangsu 210009 (CN); DENG, Song, Jiangsu 210009 (CN)
(74) Representative: Von Rohr Patentanwälte Partnerschaft mbB
(86) International application number: PCT/CN2010/075183
(87) International publication number: WO 2011/057505

(56) References cited:
- EP-A1- 0 812 811
- EP-A2- 1 428 804
- CN-A- 1 587 157
- CN-A- 1 587 157
- CN-A- 101 134 647
- CN-A- 101 717 210
- CN-A- 101 717 210
- DE-A1- 2 365 152
- DE-A1- 19 540 996
- DE-A1- 19 844 038
- US-A- 4 496 396
- DATABASE EPODOC [Online] EUROPEAN PATENT OFFICE, THE HAGUE, NL; 20 August 2007 (2007-08-20), Zubekhin, S. A.: "Method of production of high-early-strength Portland cement and method of production of concrete on base of this cement", XP002676140, Database accession no. RU-2005110608-A & RU 2 304 562 C2 (ZUBEKHIN SERGEJ ALEKSEEVICH [RU]; JUDOVICH BORIS EHMMANUILOVICH [RU]) 20 August 2007 (2007-08-20)
- DATABASE EPODOC EUROPEAN PATENT OFFICE, THE HAGUE, NL; 27 June 2000 (2000-06-27), Ivantitskij, V. L.: "Method of preparing Portland cement clinker", XP002676141, Database accession no. RU-99120477-A

## Description

### Field of the invention

The present invention relates to a process for controlling crystal form of Alite in Portland cement clinker, and particularly relates to a method for improving the performance of Portland cement clinker.

### Background of the invention

Cement industry is growing rapidly in China. The output of cement in China in 2008 was around 1,45 billion tons, which took up around 50% of global cement total output and had been No.1 cement producing country for 24 consecutive years all over the world. Due to the fact that Chinese economy is in the phase of rapid development, it is predicted that China's cement output will continuously increase at a rate of 10%. Although lots of cement is produced in China, the overall cement quality is relatively low, thus the lifetime of concrete work is influenced, therefore, the performance of cement has to be improved. Portland cement mainly consists of Portland cement clinker, plaster and composite material. In order to improve the performance of Portland cement, the performance of Portland cement clinker has to be improved. Portland cement clinker mainly consists of Alite, Belite, C₃A(3CaO·Al₂O₃) and C₄AF (4CaO·3Al₂O₃·Fe₂O₃). Alite is the main supplier to provide gelling property of Portland cement clinker, while it is also the main energy consumer. Therefore, the content of C₃S in clinker or its activity has to be improved in order to improve gelling property of Portland cement clinker, however, the increase of the content of C₃S in clinker will lead to increase of energy consumption, therefore, under the national demand of energy saving and emission reduction, one of the effective measures to improve the performance of cement clinker is to improve the activity of Alite in Portland cement clinker. At present, doping is the most commonly used method to improve the activity of Alite, wherein high-activity Alite is obtained via modification of its crystal form.

### Summary of the invention

The object of present invention is to improve the performance of Portland cement clinker, providing a process for controlling crystal form of Alite in Portland cement clinker, as a result, the crystal form of Alite in Portland cement clinker is changed and therefore the performance of Portland cement clinker is improved.

In order to realize said object, the technical scheme of present invention is: a process for controlling crystal form of Alite in Portland cement clinker, wherein it includes the following steps:
(1) The prepared Portland cement raw meal is calcined;
(2) Portland cement raw meal is heated to 1400∼1600°C at a rate of 1∼35°C per min, and kept at said temperature and then naturally cooled;
(3) When its temperature is at 600∼800°C, the said cooled clinker is heated at a rate of 1∼35°C per minute until it reaches 700∼1300°C, the said clinker is kept at said temperature, and then it is naturally cooled;
(4) The said cooled clinker is ground to powder with the aid of ball mill;
Or it consists of the following steps:
(1B) The prepared Portland cement raw meal is calcined;
(2B) Portland cement raw meal is heated to 1400∼1600°C at a rate of 1∼35°C per minute, kept at said temperature and then it is transferred to a cooler, being cooled at a rate of 40∼80°C per minute;
(3B) When the temperature reaches 700∼1300°C, it is kept at said temperature;
(4B) The said clinker is naturally cooled; the cooled clinker is ground to powder with the aid of ball mill.

The holding time of step (2), (3), (2B) and (3B) is preferred to be 5∼120 min, respectively. The specific surface area of ground powder of step (4) and (4B) is preferred to be 340 360m²/kg.

In step (1) and (1B), the prepared cement raw meal is calcined to form clinker according to regular processing parameters. Besides, calcined clinker could also be directly used in the following thermal treatment.

### Beneficial effects of present invention:

The present invention relates to a process for controlling crystal from of Alite in Portland cement clinker, wherein Portland cement clinker is thermally treated so that the crystal form of Alite in Portland cement clinker is changed and the performance of Portland cement clinker is improved. The present process is easy and feasible.

### Brief Description of the Drawings

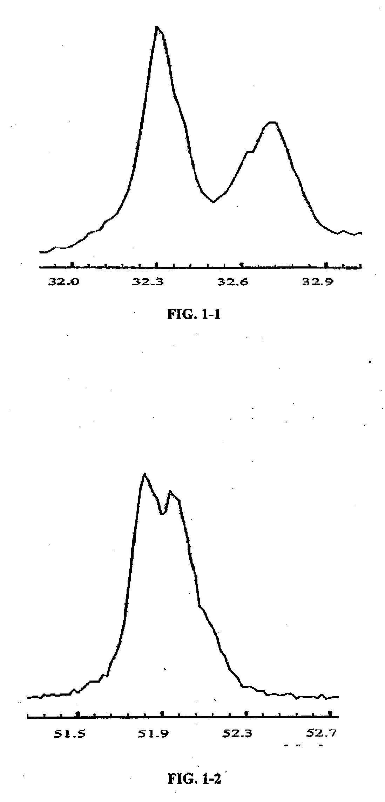

Fig.1 is XRD spectrum of Alite in cement clinker at different 29 (the said clinker is produced by Huaihai Cement Factory), wherein Fig. 1-1 is XRD spectrum (2θ = 32∼33°) of Alite in cement clinker without thermal treatment, Fig. 1-2 is XRD spectrum (2θ = 51.5∼52.7°) of Alite in cement clinker without thermal treatment;

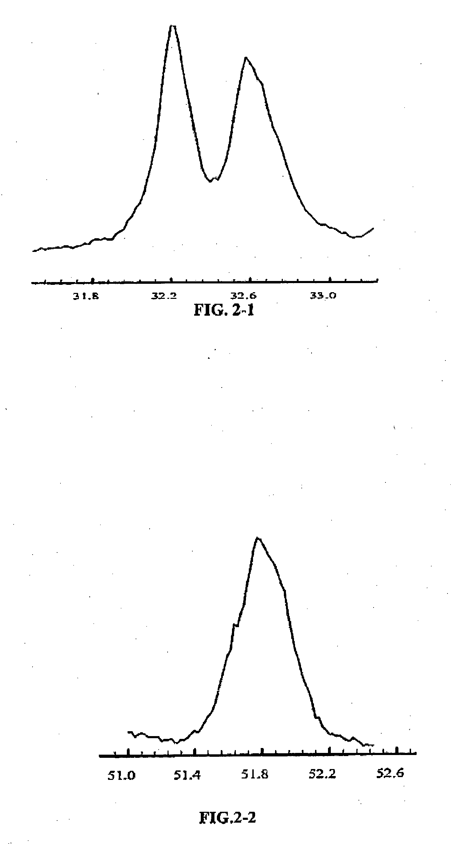

Fig. 2 is XRD spectrum of Alite in cement clinker at different 2θ (the said clinker is produced by Huaihai Cement Factory and is thermally treated); wherein Fig. 2-1 is XRD spectrum (2θ = 32∼33) of Alite in cement clinker after thermal treatment, Fig. 2-2 is XRD spectrum (2θ = 51.0∼52,5°) of Alite in cement clinker after thermal treatment.

### Embodiment

The present invention is further illustrated with reference to the following examples, but the present invention is not limited to the following examples.

### Example 1:

(1) The prepared Portland cement raw meal is heated to 1450°C and calcined for 1h; and then cooled;
(2) The temperature of Portland cement raw meal is increased at a rate of 5°C/min until it reaches 1450°C, and kept at said temperature for 30min, and then naturally cooled;
(3) The said cooled clinker is heated at a temperature below 800°C, the temperature is increased at a rate of 10°C per minute until it reaches 1100°C, subsequently, the clinker is kept at said temperature for 60min and then naturally cooled;
(4) The said cooled clinker was ground to powder with the aid of ball mill, the specific surface area of said powder is 340m²/kg; the XRD spectrum of Alite in said clinker and the XRD spectrum of Alite in clinker of Xuchou Huaihai Cement Factory without thermal treatment are shown in Fig.1 and Fig.2; it can be seen that after calcination at 1100°C, for 60min, the crystal form of Alite in Portland cement clinker of Huaihai Cement Factory is changed from M3 to M1.
(5) 4g plaster was added to 96g finally obtained cement clinker, the said mixture is stirred uniformly, subsequently, 29mL water (ratio between water and cement w/c = 0.29) was added, the said mixture was stirred and molded to form 20x20x20mm samples, and the 3d and 28d compressive strength of the samples are determined. Samples are first cured in a curing box for 24h, wherein the relative humidity is 90% and the temperature is 20±2°C, and then knockout sample is cured in a water curing case at 20±1°C. The comparison of resulting strength is shown in Table 1.

**Table 1 Plaster strength of Portland cement clinker (MPa)**

| Examples | 3d | 28d |
|---|---|---|
| Xuzhou Huaihai Cement Factory (Portland cement clinker) | 55.6 | 88.6 |
| Example 1 | 57.3 | 92.9 |

### Example 2:

(1) The prepared Portland cement raw meal is heated to 1480°C and calcined for 0.5h; and then cooled;
(2) The temperature of said Portland cement raw meal is increased at a rate of 10°C/min until it reaches 1500°C, and kept at said temperature for 60min, and then it was naturally cooled;
(3) The said cooled clinker is heated at a temperature below 700°C, the temperature is increased at a rate of 15°C/min until it reaches 1000°C, subsequently, the said clinker and kept at said temperature for 90min, and then naturally cooled; the said clinker is ground to powder with the aid of ball mill, the resulting specific surface area of said powder is 350m²/kg;
(4) 4g plaster is added to 96g finally obtained cement clinker, the said mixture is stirred uniformly, subsequently, 29mL water (ratio between water and cement w/c = 0.29) is added, the said mixture was stirred and molded to form 20x20x20mm samples, and the 3d and 28d compressive strength of the samples are determined. Samples are first cured in a curing box for 24h, wherein the relative humidity is 90% and the temperature is 20±2°C, and then knockout sample is cured in a water curing box at 20±1°C. The comparison of resulting strength is shown in Table 2.

**Table 2 Plaster strength of Portland cement clinker (MPa)**

| Examples | 3d | 28d |
|---|---|---|
| Xuzhou Huaihai Cement Factory (Portland cement clinker) | 55.6 | 88.6 |
| Example 2 | 58.0 | 95.6 |

### Example 3:

(1) The prepared Portland cement raw meal is heated to 1450°C and calcined for 1h; and then cooled;
(2) The temperature of said Portland cement raw meal is increased at a rate of 5°C/min until it reaches 1450°C, and kept at said temperature for 60 minutes, and then the said mixture enters a cooling machine, and the temperature of said mixture is decreased at a rate of 55°C/minute;
(3) The temperature is cooled to 1000°C, and the mixture is kept at said temperature for 60 minutes;
(4) And then it was naturally cooled; the cooled clinker is ground to powder with the aid of ball mill, wherein the specific surface area of said powder was 360m²/kg;
(5) 4g plaster was added to 96g finally obtained cement clinker, the said mixture was stirred uniformly, subsequently, 29mL water (ratio between water and cement w/c = 0.29) is added, the said mixture is stirred and molded to form 20x20x20mm samples, and the 3d and 28d compressive strength of samples are determined. Samples are first cured in a curing box for 24h, wherein the relative humidity is 90% and the temperature is 20±2°C, and then knockout sample is cured in a water curing box at 20±1°C. The comparison of resulting strength is shown in Table 3.

**Table 3 Plaster strength of Portland cement clinker (MPa)**

| Examples | 3d | 28d |
|---|---|---|
| Xuzhou Huaihai Cement Factory (Portland cement clinker) | 55.6 | 88.6 |
| Example 3 | 58.5 | 105.0 |

### Example 4:

(1) The prepared Portland cement raw meal is heated to 1450°C and calcined for 1h; and then cooled;
(2) The temperature of said Portland cement raw meal is increased at a rate of 15°C/min until it reaches 1500°C, and kept at said temperature for 30 minutes, and then the said mixture enters a cooling machine, and the temperature of said mixture was decreased at a rate of 50°C per minute;
(3) The temperature is cooled to 1100°C, and then the mixture is kept at said temperature for 30 minutes;
(4) And then it was naturally cooled; the cooled clinker was ground to powder with the aid of ball mill, wherein the specific surface area of said powder was 350m²/kg;
(5) 4g plaster is added to 96g finally obtained cement clinker, the said mixture was stirred, subsequently, 29mL water (ratio between water and cement w/c = 0.29) is added, the said mixture is stirred and molded to form 20x20x20mm samples, and the 3d and 28d compressive strength of samples are determined. Samples are first cured in a curing box for 24h, wherein the relative humidity is 90% and the temperature is 20±2°C, and then knockout sample is cured in a water curing case at 20±1°C. The comparison of resulting strength is shown in Table 4.

**Table 4 Plaster strength of Portland cement clinker (MPa)**

| Examples | 3d | 28d |
|---|---|---|
| Xuzhou Huaihai Cement Factory (Portland cement clinker) | 55.6 | 88.6 |
| Example 4 | 56.8 | 91.5 |

## Claims

1. A process for controlling crystal form of Alite in Portland cement clinker, wherein it consists of the following steps:
(1) the prepared Portland cement raw meal is calcined;
(2) the temperature is increased at a rate of 1 - 35 °C per min until it reaches 1400 - 1600 °C, the Portland cement raw meal is kept at said temperature and then naturally cooled;
(3) the cooled cement clinker is heated once its temperature is at 600 - 800 °C at a rate of 1 - 35 °C per minute until it reaches 700 - 1300 °C, and kept at said temperature, and then naturally cooled;
(4) the said cooled cement clinker is ground to powder with the aid of ball mill.

2. A process for controlling crystal form of Alite in Portland cement clinker, wherein it consists of the following steps:
(1B) the prepared Portland cement raw meal is calcined;
(2B) Portland cement raw meal is heated to 1400-1600 °C at a rate of 1 - 35 °C per min until it reaches 1400 - 1600 °C, and kept at said temperature and then it is transferred to a cooling machine, being cooled at a rate of 40 - 80 °C per min;
(3B) when the temperature of said clinker is cooled to 700 - 1300 °C, it is kept at said temperature;
(4B) the clinker is naturally cooled; the cooled clinker is ground to powder with the aid of ball mill.

3. The process according to claim 1 or 2, wherein the holding time of step (2), (3), (2B) and (3B) is 5-120 minutes, respectively.

4. The process according to claim 1 or 2, wherein the specific surface area of powder of said step (4) and (4B) is 340 - 360 m²/kg.

## Patentansprüche

1. Verfahren zur Kontrolle der kristallinen Form von Tricalciumsilikat in Portlandzementklinker, welches aus den folgenden Schritten besteht:
(1) das vorbereite Portlandzement-Rohmehl wird kalziniert;
(2) die Temperatur wird mit einer Rate von 1 - 35 °C pro Minute erhöht bis 1.400 - 1.600 °C erreicht sind, das Portlandzement-Rohmehl wird bei der vorgenannten Temperatur gehalten und dann natürlich abgekühlt;
(3) der abgekühlte Zementklinker wird sobald seine Temperatur bei 600 - 800 °C liegt mit einer Rate von 1 - 35 °C pro Minute erhitzt bis 700 - 1.300 °C erreicht sind und bei der vorgenannten Temperatur gehalten und dann natürlich abgekühlt;
(4) der abgekühlte Zementklinker wird mit Hilfe einer Kugelmühle zu Pulver vermahlen.

2. Verfahren zur Kontrolle der kristallinen Form von Tricalciumsilikat in Portlandzementklinker, welches aus den folgenden Schritten besteht:
(1B) das vorbereite Portlandzement-Rohmehl wird kalziniert;
(2B) das Portlandzement-Rohmehl wird mit einer Rate von 1 - 35 °C pro Minute auf 1.400 - 1.600 °C erhitzt bis 1.400 - 1.600 °C erreicht sind und bei der Temperatur gehalten und dann wird es in eine Kühlmaschine überführt und mit einer Rate von 40 - 80 °C pro Minute abgekühlt;
(3B) wenn die Temperatur des Klinkers auf 700 - 1.300 °C abgekühlt ist, wird er bei dieser Temperatur gehalten;
(4B) der Klinker wird natürlich abgekühlt; der abgekühlte Klinker wird mit Hilfe einer Kugelmühle zu Pulver vermahlen.

3. Verfahren nach Anspruch 1 oder 2, wobei die Standzeit der Schritte (2), (3), (2B) und (3B) 5 - 120 Minuten beträgt.

4. Verfahren nach Anspruch 1 oder 2, wobei die spezifische Oberfläche des Pulvers aus den Schritten (4) und (4B) 40 - 360 m²/kg beträgt.

## Revendications

1. Procédé de contrôle de la forme cristalline de l'alite dans un clinker de ciment Portland, constitué des étapes suivantes :
(1) la farine brute de ciment Portland préparée est calcinée ;
(2) la température est augmentée à une vitesse de 1 à 35 °C par min jusqu'à ce qu'elle atteigne 1 400 à 1 600 °C, la farine brute de ciment Portland est maintenue à ladite température puis refroidie naturellement ;
(3) le clinker de ciment refroidi est chauffé une fois que sa température est à 600 - 800 °C à une vitesse de 1 à 35 °C par minute jusqu'à ce qu'il atteigne 700 à 1 300 °C, et maintenu à ladite température, puis refroidi naturellement ;
(4) ledit clinker de ciment refroidi est broyé sous la forme d'une poudre à l'aide d'un broyeur à boulets.

2. Procédé de contrôle de la forme cristalline de l'alite dans un clinker de ciment Portland, constitué des étapes suivantes :
(1 B) la farine brute de ciment Portland préparée est calcinée ;
(2B) la farine brute de ciment Portland est chauffée à 1 400 - 1 600 °C à une vitesse de 1 à 35 °C par min jusqu'à ce qu'elle atteigne 1 400 à 1 600 °C, et maintenue à ladite température puis elle est transférée dans une machine de refroidissement, étant refroidie à une vitesse de 40 à 80 °C par min ;
(3B) lorsque la température dudit clinker est refroidie à 700 - 1 300 °C, il est maintenu à ladite température ;
(4B) le clinker est refroidi naturellement ; le clinker refroidi est broyé sous la forme d'une poudre à l'aide d'un broyeur à boulets.

3. Procédé selon la revendication 1 ou 2, dans lequel le temps de maintien de l'étape (2), (3), (2B) et (3B) est de 5 à 120 minutes, respectivement.

4. Procédé selon la revendication 1 ou 2, dans lequel la surface spécifique de la poudre de ladite étape (4) et (4B) est de 340 à 360 m²/kg.
